# EUROPÄISCHE PATENTANMELDUNG

(11) **EP 2 111 751 A2**
(43) Veröffentlichungstag der Anmeldung: **28.10.2009**
(21) Anmeldenummer: 09005131.9
(22) Anmeldetag: 07.04.2009
(51) Int. Cl.: A01K 1/01, A01K 1/015

(54) **Entmistungssystem zur Beseitigung von Stallmist**

(30) Priorität: 24.04.2008 AT 6492008
(71) Anmelder: Steger, Anton, 5723 Uttendorf (AT)
(72) Erfinder: Steger, Anton, 5723 Uttendorf (AT)
(74) Vertreter: Grape & Schwarzensteiner

(57) **Zusammenfassung**

Die Erfindung betrifft ein Element (6, 6') zur Beseitigung von Stallmist von einer Standfläche (1) mit einem Aufenthaltsbereich (3) für ein Tier, insbesondere Rind oder Pferd, mit zumindest einer Schubeinrichtung (8, 8'), die aus einer Ruheposition in eine Entmistungsposition bewegbar ist, wobei sie den auf einer Oberfläche (5) befindlichen Stallmist in eine Auffangvorrichtung (7) bewegt, sowie ein Entmistungssystem und ein Verfahren hierzu.

## Beschreibung

Die Erfindung betrifft ein Entmistungssystem zur Beseitigung von Stallmist von einer Standfläche mit einem Aufenthaltsbereich für ein Tier, insbesondere Rind oder Pferd, sowie ein Verfahren hierzu.

Die regelmäßige Entfernung von Stallmist, insbesondere von Kot und Urin der in dem Stall untergebrachten Tiere ist wesentlich für die Gesundheit und das Wohlbefinden der Tiere. Wird der Stallmist nicht entfernt, so verschlechtert sich die Luft und der Stallmist wird zum Nährboden für zahlreiche, krankheitsverursachenden Bakterien.

Da das händische Ausmisten von Ställen, vor allem in Großbetrieben, zumeist unwirtschaftlich ist, wurden zahlreiche unterschiedliche Vorrichtungen für die zumindest teilweise automatische Reinigung von Stallplätzen entwickelt. Insbesondere sind Spaltböden, wie beispielsweise in der DE 26 29 183 A1 gezeigt, bekannt geworden. Diese Spaltböden haben jedoch den Nachteil, dass die Öffnungen sich leicht verschließen und damit der Mist auf der Standfläche, die zumeist auch Fressstelle des Tieres ist, verbleibt. Zudem sind sie nur sehr eingeschränkt für die Verwendung von Einstreu geeignet.

Die US 3,859,962 zeigt einen Mistplatz mit abgeschrägter Standfläche, wobei Kanäle vorgesehen sind, in welchen mittels Wasser die Exkremente weggespült werden.

Die US 4,332,216 zeigt ein Bandfördersystem, das unterhalb von Käfigen oder kleinen Ställen angebracht ist, wobei der Mist durch den perforierten Käfigboden auf das Förderband fällt und abtransportiert wird.

In der NL 1 010 771 C ist eine Vorrichtung zur Entfernung von Stallmist von einer Standfläche beschrieben, wobei ein Schieberelement über die Standfläche geführt wird, der den auf der Standfläche befindlichen Stallmist in eine Auffangeinrichtung transportiert.

Nachteilig an diesen Vorrichtungen ist, dass sie nur bedingt bis gar nicht insbesondere für die Laufstallhaltung und ebenso wenig für die tiergerechte Haltung insbesondere mit Einstreu geeignet sind.

Es ist daher Aufgabe der Erfindung eine Vorrichtung für die Entfernung von Stallmist bereitzustellen, die automatisierbar ist, und insbesondere in einer tiergerechten Stallhaltung, insbesondere in einem Laufstall, einsetzbar ist.

Diese Aufgabe wird erfindungsgemäß dadurch gelöst, dass die Standfläche eine Vielzahl von nebeneinander angeordneten Elementen aufweist, wobei jedes Element aus einer ersten, angehobenen Position in eine zweite, abgesenkte Position bewegbar ist, sich jedes Element über eine Länge der Standfläche erstreckt und eine Oberfläche des Elementes in einer angehobenen Position des Elementes Bestandteil der Standfläche ist, das Element zumindest eine aus einer Ruheposition in eine Entmistungsposition über die Oberfläche des Elementes bewegbare Schubeinrichtung aufweist, um einen auf der Oberfläche des Elementes befindlichen Stallmist in eine Auffangvorrichtung zu bewegen, und die Schubeinrichtung bei abgesenktem Element unterhalb jener Ebene bewegbar ist, in der sich die Oberfläche des Elementes bei angehobener Position des Elementes befindet.

Der Vorteil der vorliegenden Erfindung besteht darin, dass die Tierexkremente auf automatische Weise durch Aktivierung der Schubeinrichtung entfernt werden. Dadurch kann der Stall auch mehrmals am Tag vollautomatisch gereinigt werden, so dass die Tiere stets eine saubere Standfläche haben. Die Schubeinrichtung bewegt dabei die Exkremente beispielsweise in einer Schubbewegung in eine Auffangvorrichtung, die bevorzugterweise als Rinne ausgebildet ist, von wo der Stallmist aus dem Stall hinaus transportiert wird. Insbesondere ist diese Vorrichtung auch für die Stallhaltung mit Einstreu geeignet.

Besonders vorteilhaft ist die erzielbare Einsparung an der Gesamtfläche, da bei einem erfindungsgemäß ausgerüsteten Stall die Funktionen Fressplatz und Liegefläche gemeinsam an einem Ort verwirklicht werden können. Dies ist bei herkömmlichen Lösungen nicht der Fall, da sich die Tiere am Fressplatz nicht hinlegen können. Auf diese Weise ist ein Platzersparnis von etwa 25% erzielbar und es ist eine Betriebsumstellung leichter und kostengünstiger möglich. Es ist auch möglich, eine Kombination von Laufstall und Anbindestall zu realisieren, was eine Lösung mit großem Zukunftspotential darstellt, da auf diese Weise die Nachteile beider Systeme vermieden werden können. Einerseits wird die freie Beweglichkeit ermöglicht und andererseits kann die gefürchtete Verwilderung der Tiere im Laufstall hintangehalten werden. Auch die Pflege und ärztliche Betreuung ist vereinfacht, wenn die Tiere grundsätzlich daran gewöhnt sind, angebunden zu werden.

In einer bevorzugten Ausführung der Erfindung ist das Element an zumindest einem Ende absenkbar. Damit wird eine Neigung der Oberfläche des Elementes erzielt, sodass die Schwerkraft die Beseitigung des Stallmistes zusätzlich unterstützt.

Die Absenkung des Elementes an zumindest einem Ende erfolgt bevorzugterweise mittels Hubzylinder, während die Schubeinrichtung mit einem Schubzylinder in Verbindung steht, der die Schubeinrichtung in eine im Wesentlichen horizontale Richtung bewegt. Selbstverständlich sind auch andere, dem Fachmann bekannte Vorrichtungen einsetzbar, die geeignet sind, das Element bzw. Teile des Elements in der erfindungsgemäßen Weise zu bewegen.

Besonders bevorzugt ist eine Variante der Erfindung, bei der zumindest ein Ende des Elements über ein Verbindungselement mit zumindest einem weiteren Element, das kein benachbartes Element ist, sowie mit zumindest einem Hubzylinder in Verbindung steht. Auf diese Weise werden mit einem Hubzylinder mehrere Elemente angesteuert.

Als besonders geeignet für den dauerhaften Einsatz haben sich Schub- und Hubzylinder erwiesen, die pneumatisch, hydraulisch oder elektrisch angetrieben sind.

Eine besonders tiergerechte Haltung mit einer erfindungsgemäßen Beseitigung von Stallmist ist gegeben, wenn der Aufenthaltsbereich der Standfläche eine einstückige Auflage, bevorzugterweise aus Gummi oder Kunststoff, aufweist, wobei an dem Aufenthaltsbereich ein Mistbereich anschließt, der von zumindest einer Schubeinrichtung von Stallmist befreit wird. Die meisten Tiere misten nur in einem bestimmten Bereich, sofern ihnen hierfür ausreichen Platz zur Verfügung gestellt wird, wobei der Aufenthaltsbereich für gewöhnlich sauber gehalten wird. Bei der vorliegenden Erfindung befindet sich das Tier bevorzugt in dem Aufenthaltsbereich, der keinerlei Perforierung oder Spalten aufweist, und mistet auf einen Mistbereich, der sich vorzugsweise auf gleichem oder geringfügig niedrigerem (Boden)Niveau wie der Aufenthaltsbereich befindet. Bei der Reinigung des Mistbereiches wird die Schubeinrichtung über den Mistbereich in die Entmistungsposition geführt und befördert dabei den Mist in die Auffangvorrichtung.

Bei einer besonders bevorzugten Ausführung der Erfindung ist die zumindest eine Schubeinrichtung unterhalb des Aufenthaltsbereiches für das Tier angeordnet, und ist in der Entmistungsposition über den Mistbereich bewegbar. Dabei wird das Tier nicht durch die Bewegung der Schubeinrichtung gestört, und die Verletzungsgefahr ist weitgehend ausgeschlossen.

Durch das erfindungsgemäße Entmistungssystem ist die Verwendung von Spaltböden im Aufenthaltsbereich einer Standfläche für ein Tier nicht mehr notwendig; dies ist jedenfalls der Gesundheit und dem Wohlbefinden des Tieres zuträglich. Trotzdem ermöglicht es ein automatisiertes Ausmisten des Stalles.

Bevorzugterweise sind die Elemente unterhalb des Aufenthaltsbereiches angeordnet, wobei sie eine größere Länge als die Auflagematte aufweisen, und derart anschließend an den Aufenthaltsbereich den Mistbereich bilden. Dieser lamellenartige Aufbau bewirkt, dass nicht der gesamte Mistbereich auf einmal, sondern immer nur Teilbereiche von Stallmist befreit werden. Dadurch wird die Verletzungsgefahr für die Tiere erheblich verringert.

Diese nur teilweise Reinigung des Mistbereiches wird dadurch erzielt, dass die Elemente in zumindest zwei Gruppen zusammengefasst sind, wobei jede Gruppe zumindest ein Element umfasst, und jede Gruppe getrennt ansteuerbar ist.

Besonders bevorzugt hierbei ist, wenn nebeneinander angeordneten Elemente unterschiedlichen Gruppen zugeordnet sind. So gehört beispielsweise jedes zweite Element einer bestimmten Gruppe an. Wird nun das Entmistungssystem aktiviert, so werden zunächst die Schubeinrichtungen der Elemente der ersten Gruppe aktiviert, und wenn diese wieder in ihre Ruheposition zurückgekehrt sind, wird die zweite Gruppe angesteuert. Damit wird der Mistbereich sozusagen "streifenweise" gesäubert, und die Verletzungsgefahr ist weiter reduziert. Bevorzugterweise ist die Breite der einzelnen "Streifen", also die Breite der Elemente, geringer als die Trittbreite des Tieres, so dass der Tierfuß, sollte er sich auf dem Mistbereich befinden, nicht in den Spalt im Mistbereich, der durch das Absenken des einzelnen Elementes entsteht, geraten kann.

Die Aufgabe wird des Weiteren durch ein Verfahren zur Beseitigung von Stallmist von einer Standfläche mit einem Aufenthaltsbereich für ein Tier und einem Mistbereich gelöst, wobei zumindest ein mit zumindest einer Schubeinrichtung versehenes Element aus einer Ruheposition in eine Entmistungsposition bewegt wird, wobei es an zumindest einem Ende abgesenkt, und die Schubeinrichtung anschließend zumindest über den Mistbereich geführt wird, wobei der auf dem Mistbereich befindliche Stallmist in eine Auffangvorrichtung befördert wird.

Wie bereits oben beschrieben wird bei dem erfindungsgemäßen Verfahren bevorzugt eine erste Gruppe von Elementen angesteuert, sodass diese Elemente an zumindest einem Ende abgesenkt werden und die den Elementen zugeordneten Schubeinrichtungen den Stallmist in die Auffangvorrichtung befördern, während zumindest eine zweite Gruppe von Elementen in ihrer Ruheposition verbleibt.

Die Ansteuerung der einzelnen Elemente bzw. Gruppen kann auf an sich bekannte Art und Weise erfolgen. So ist beispielsweise bei einer vollautomatischen Ausführung der Erfindung jeder Gruppe eine eigene Druckluftleitung zugeordnet, die die Schub- und/oder Hubzylinder aktiviert. Ein Steuerungsprogramm steuert und überwacht die Aktivierung der einzelnen Gruppen gemäß einem gespeicherten Zeitplan. Ebenso kann in einer einfachen und kostengünstigen Variante vorgesehen sein, dass jede Gruppe händisch, beispielsweise mittels eigenem Schalter auf einem Steuerungspult oder ähnlichem, aktiviert wird.

Alternativ dazu ist jeder Gruppe ein Hubzylinder und ein Schubzylinder zugeordnet, die die einzelnen Elemente der Gruppe als Einheit ansteuern.

Im Folgenden wird anhand eines nicht-einschränkenden Ausführungsbeispiels mit zugehörigen Figuren die Erfindung näher erläutert.

Darin zeigen
- Fig. 1: einen Laufstall für Rinder mit einem erfindungsgemäßen Entmistungssystem,
- Fig. 2: eine Schnittansicht von vorne des Details X aus der Fig. 1,
- Fig. 3: einen Längsschnitt des erfindungsgemäßen Elementes in der Ruheposition,
- Fig. 4: einen Längsschnitt des Elementes aus Fig. 3 in der Entmistungsposition,
- Fig. 5: einen Querschnitt des Elementes aus Fig. 3 entlang der Linie I-I,
- Fig. 6: einen Querschnitt der Entmistungsvorrichtung aus Fig. 3 entlang der Linie II-II,
- Fig. 7: einen Querschnitt der Entmistungsvorrichtung aus Fig. 3 entlang der Linie III-III,
- Fig. 8: den Laufstall entsprechend Fig. 1 in nicht abgestufter Form mit abgesenkten Elementen des mittleren Standplatzes in der Entmistungsposition,
- Fig. 9: einen Längsschnitt einer weiteren Ausführung der Erfindung in der Ruheposition,
- Fig. 10: ein Detail aus Fig. 9 und
- Fig. 11: einen Längsschnitt des Elementes aus Fig. 9 in der Entmistungsposition.

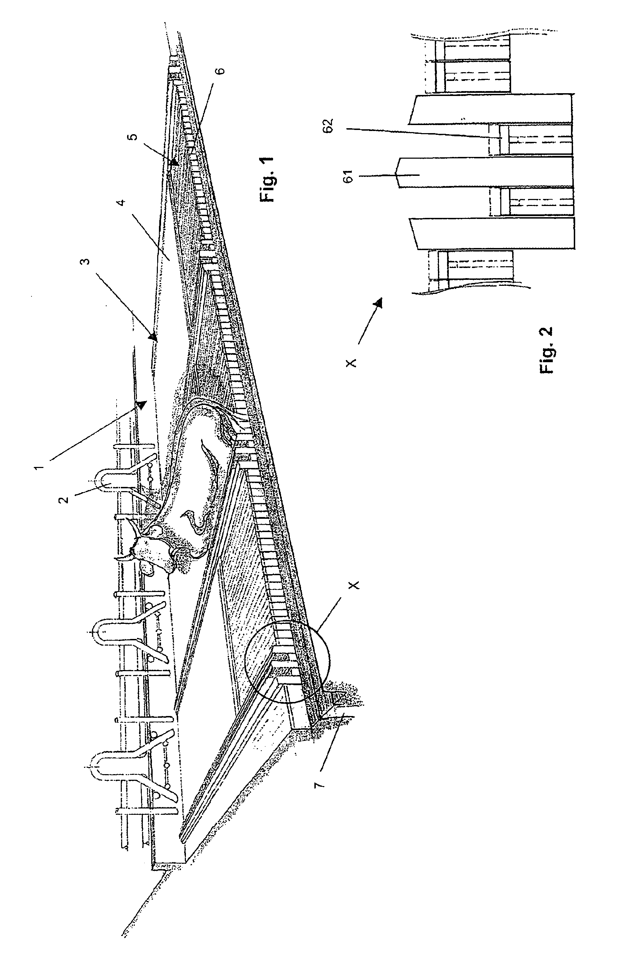

In der Fig. 1 ist ein Laufstall mit nebeneinander angeordneten Standflächen 1 für Großtiere, wie beispielsweise Rinder oder Pferde, dargestellt. Der Boden der Standfläche 1 weist hierbei einen einer Fressstelle 2 zugewandten Aufenthaltsbereich 3 auf, der mit einer Liegematratze, d.h. einer einstickigen Auflage 4 aus einem strapazierfähigen Material, beispielsweise Kunststoff oder Gummi, belegt ist. Der Aufenthaltsbereich 3 ist vorteilhafterweise mit einer Einstreu aus Stroh, Sägespänen oder ähnlichem bedeckt, sodass sich das Tier auch freiwillig bevorzugt in dem Aufenthaltsbereich 3 aufhält. Ebenso kann das Tier bei einer konventionellen Tierhaltung in diesem Aufenthaltsbereich 3 angebunden sein.

An den Aufenthaltsbereich 3 schließt ein von der Fressstelle 2 abgewandter Mistbereich 5 an, der lamellenartig nebeneinander angeordnete Elemente 6 aufweist, die ebenfalls vorzugsweise über eine Kunststoffoberfläche verfügen. Dem Mistbereich 5 ist des Weiteren eine Rinne 7 zugeordnet, über die der von den Tieren produzierte Stallmist abtransportiert wird.

Jeder Standfläche 1 ist ein Tier zugeordnet. Die Unterteilung in einzelne Standflächen 1 erfolgt hierbei mittels einzelner über die Oberfläche hinausragender Elemente 61 (siehe Fig. 2), wobei zwischen den erhöhten Elementen 61 weitere Elemente 62 angeordnet sind, die sich in einem dauerhaft abgesenkten Zustand befinden. Durch die abgeschrägte Oberfläche der erhöhten Elemente 61 wird der Übertritt eines Tieres auf einen benachbarten Aufenthaltsbereich 3 und insbesondere Fressstelle 2 eines anderen Tieres erfolgreich unterbunden, ohne dass hierfür Mauern, Gitter oder ähnliches zur Trennung der einzelnen Standflächen 1 notwendig wären.

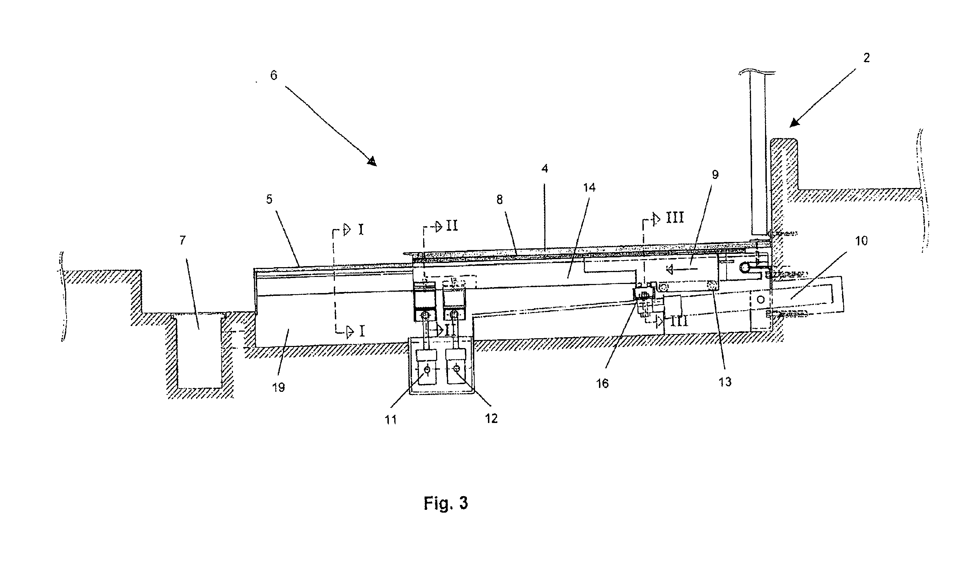

Die Fig. 3 zeigt ein in der Ruheposition befindliches Element 6 des erfindungsgemäßen Entmistungssystems in einer Seitenansicht. Hierbei ist ein Schubelement, eine sogenannte Schubzunge 8 unterhalb der Auflage 4 angeordnet; die Oberfläche des Mistbereichs 5 ist gegenüber der Auflage 4 etwas abgesetzt. Diese Schubzunge 8 kann beispielsweise aus Kunststoff, Nirosta oder anderen Metallen hergestellt sein.

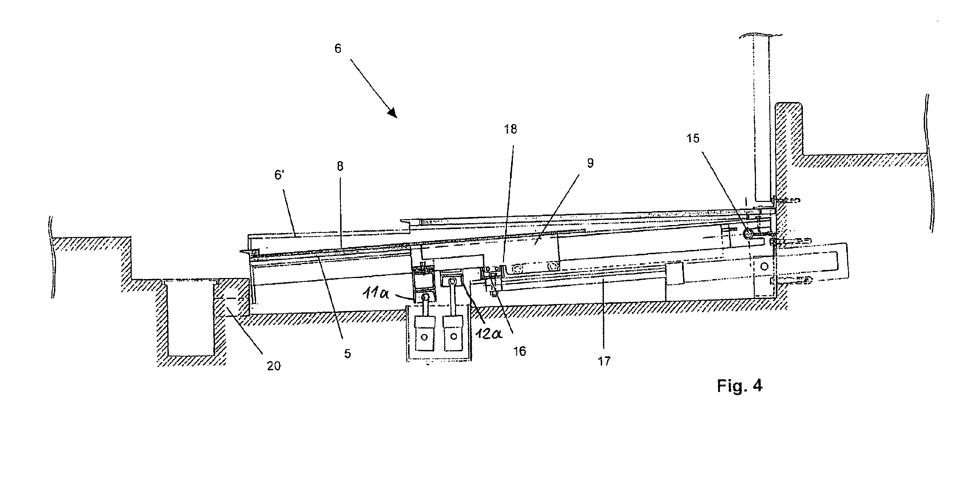

Wird nun die Schubzunge 8, die über einen Verbindungsteil 9, dem sogenannten Schubzungenwagen, der mit einem Schubzylinder 10 in Verbindung steht, in eine im Wesentlichen horizontale Richtung verschoben, so gleitet sie, wie in Fig. 4 gezeigt, über den Mistbereich 5 und schiebt dabei den auf dem Mistbereich 5 befindlichen Mist in die Rinne 7. Gleichzeitig wird der Mistbereich 5 und damit auch die Schubzunge 8 mithilfe eines Hubzylinders 11, 12 abgesenkt, sodass der Mist leichter in die Rinne 7 befördert werden kann. Die Absenkung ist zudem derart, dass die Schubzunge 8 die Gesamtoberfläche des Elements 6 nicht erreicht, so dass es zu keinen Verletzungen von Tieren, insbesondere auch nicht von Neugeborenen, deren Geburt unbeobachtet verlief, kommen kann.

Aus der Rinne 7 wird anschließend der Mist auf an sich bekannte Weise beispielsweise mittels Wasser oder einer Schubeinrichtung zu einem Mistplatz oder dergleichen abtransportiert.

Der Schubzungenwagen 9 weist Führungselemente, beispielsweise Rollen 13 auf, mithilfe derer der Verbindungsteil 9 und damit die Schubzunge 8 durch Einwirkung des Schubzylinders 10 in Pfeilrichtung entlang einer Führung 14, die unterhalb des Aufenthaltsbereiches 3 angeordnet ist, verschoben wird.

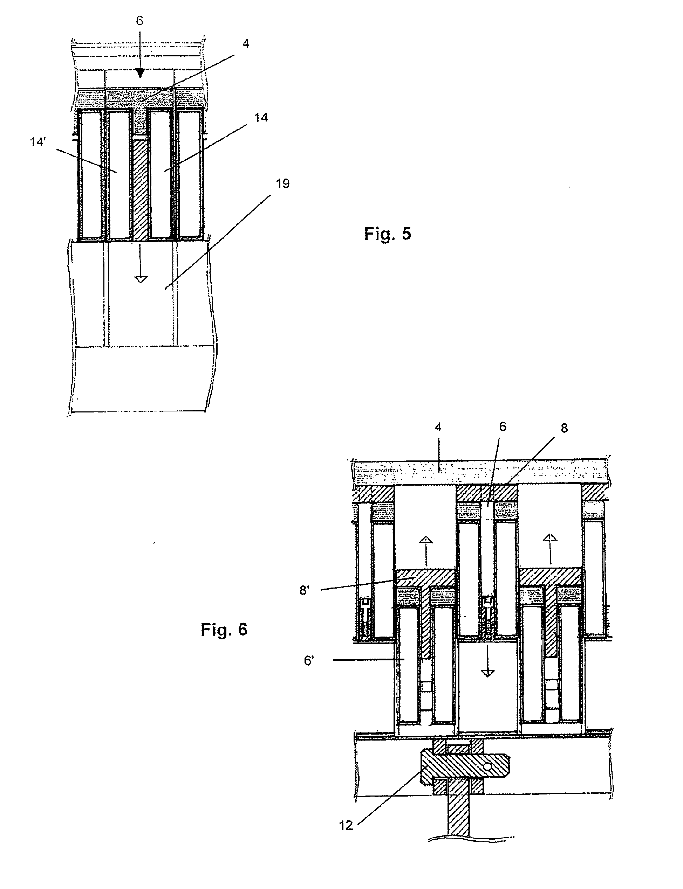

Wie in den Fig. 5 bis 7 gezeigt, verfügt jedes Element 6, 6' über zwei derartige, parallel zueinander ausgerichtete Führungen 14, 14', wobei der senkrechte Fortsatz der im Querschnitt T-förmigen Schubzunge 8, 8' zwischen den beiden Führungen 14, 14' angeordnet ist, während der horizontal verlaufende Teil der Schubzunge 8, 8' die obere Kante der Führungen 14, 14' abdeckt. Zusätzlich sind die Führungen 14, 14' an ihrem der Fressstelle 2 zugewandten Ende um eine Drehachse 15 unter Einwirkung der Hubzylinder 11, 12 verschwenkbar.

Des Weiteren ist ein Schubführungsteil 16 vorgesehen, der an einem Kolbenfortsatz 17 des Schubzylinders 10 befestigt ist. Wird die Schubzunge 8 ausgefahren, so rastet der Schubführungsteil 16, der in der gezeigten Ansicht gemäß Fig. 4 einen im Wesentlichen U-förmigen Querschnitt aufweist, in eine Ausnehmung 18 des Verbindungsteils 9 ein und sichert damit die Entmistungsposition des erfindungsgemäßen Elementes 6, 6'. Nach dem Zurückziehen der Schubzunge 8 in die Ruheposition gemäß Fig. 3, wird wiederum der Hubzylinder 11 aktiviert und dabei der Verbindungsteil 9 soweit angehoben, dass der Schubführungsteil 13 wieder aus der Ausnehmung 18 herausgezogen und damit die Sicherung gelöst wird.

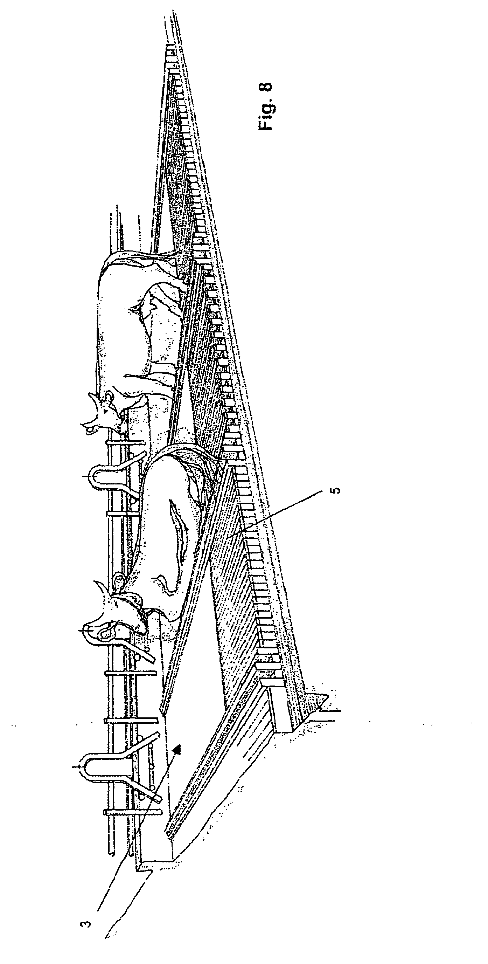

Der lamellenartige Aufbau der Entmistungsvorrichtung durch die Anordnung einzelner erfindungsgemäßen Elemente 6, 6' nebeneinander, hat den Vorteil, dass immer nur ein schmaler Streifen des Mistbereiches 5 abgesenkt und mittels Schubzunge 8 gesäubert wird (siehe Fig. 8). Die Breite der Elemente 6 sollte dabei so gewählt sein, dass eine Verletzung eines sich möglicherweise auf dem Mistbereich 5 befindlichen Tieres vermieden wird.

Der flüssige Anteil der Tierexkremente sickert bei der vorliegenden Erfindung zumindest teilweise in einen unterhalb des Mistbereichs 5 befindlichen Raum 19. Zu dessen Entleerung ist eine Entwässerungsdurchführung 20 vorgesehen, die die Flüssigkeit in die Rinne 7 ableitet.

In Fig. 5 ist ein Element 6 gezeigt, das sich in der Ruheposition befindet. Es weist zwei Führungen 14, 14' auf, an denen, wie bereits in Fig. 4 beschrieben, der Verbindungsteil 9 verschoben wird, und lässt sich in Pfeilrichtung absenken.

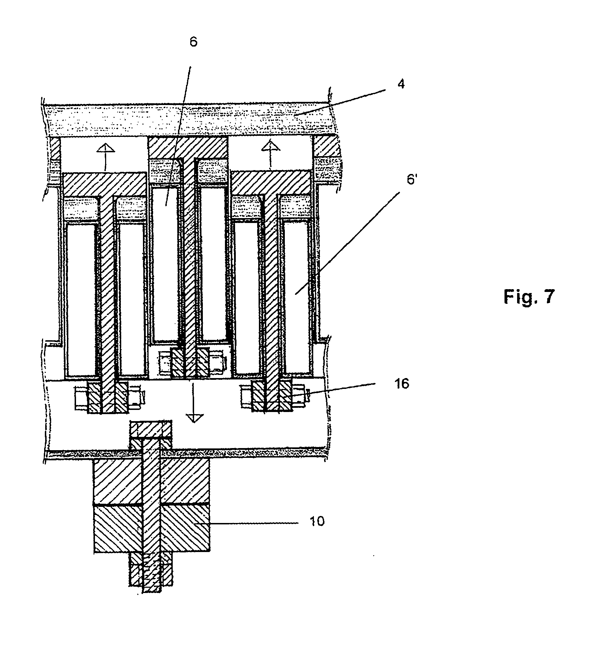

In der Fig. 6 sowie in Fig. 7 sind mehrere Elemente 6, 6' nebeneinander angeordnet dargestellt, wobei sich jeweils jedes zweite Element 6' in der abgesenkten Entmistungsposition mit ausgefahrener Schubzunge 8, 8' befindet. So kann beispielsweise eine Steuerung vorgesehen sein, die in periodischen Zeitabständen in einer vorgegebenen Reihenfolge die einzelnen Elemente aktiviert und damit eine komplette Entmistung des Stalls auslöst.

Da es zu kostspielig wäre, jedem Element 6 einen eigenen Hubzylinder 11, 12 zuzuordnen, ist vorgesehen, dass ein Verbindungselement 11a, 12a, insbesondere ein Formstahlträger, mehrere Elemente miteinander verbindet, sodass diese gemeinsam angehoben oder gesenkt werden. Dabei sind beispielsweise jedes zweite Element 6, 6' über ein derartiges Verbindungselement 11a, 12a miteinander verbunden, sodass bei Aktivierung des einen Hubzylinders 11, 12 nur jedes zweite Element 6, 6' abgesenkt wird. Ebenso verhält es sich mit dem Schubzylinder 10; auch diesem ist eine Vielzahl von Elementen 6, 6', die jeweils nicht benachbart sind, über den Schubführungsteil 16, der als ein die Elemente 6, 6' verbindender Querträger ausgebildet ist, zugeordnet.

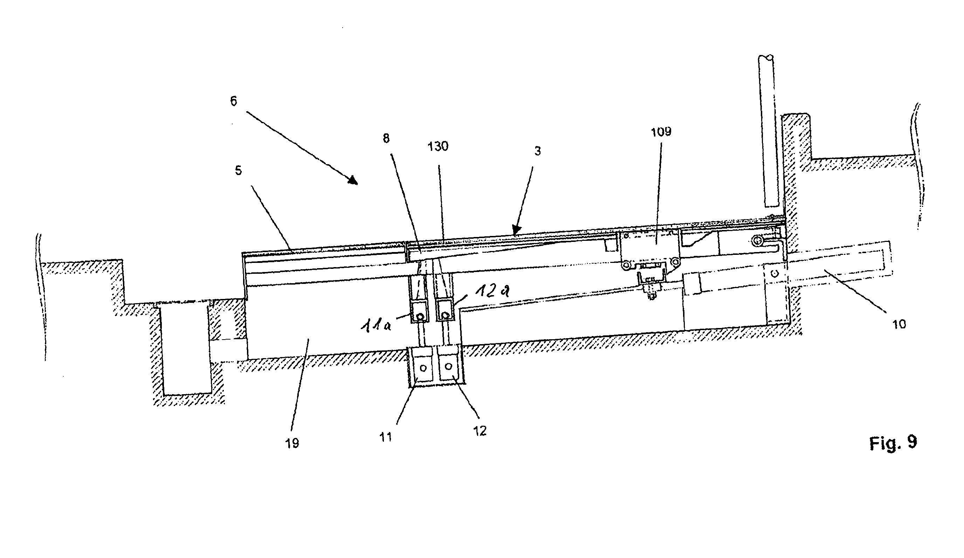

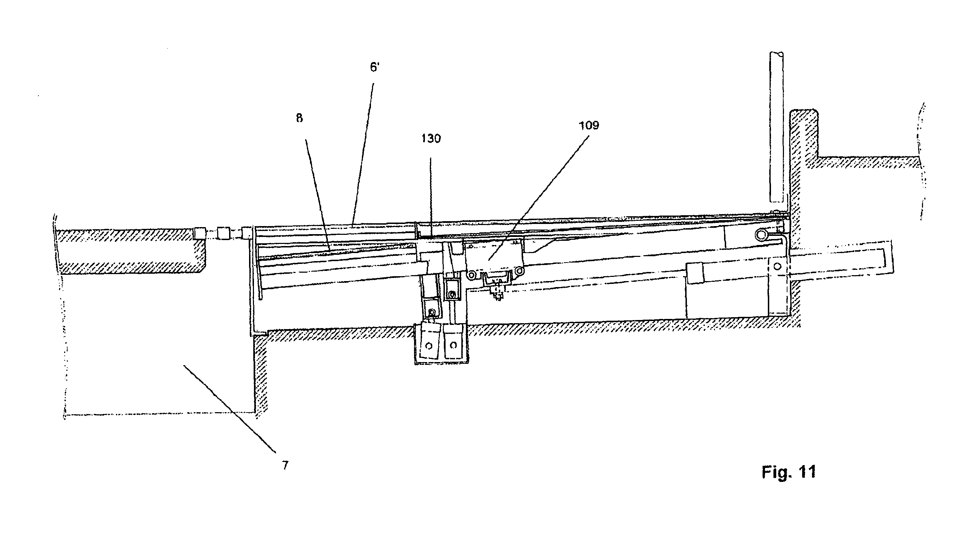

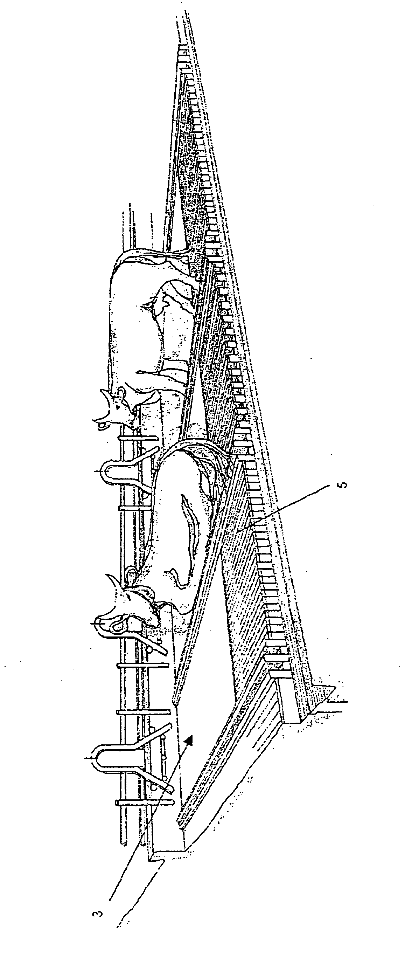

In den Fig. 9 bis 11 ist eine weitere Ausführung der Erfindung dargestellt, wobei im Gegensatz zu der vorhergehenden Variante die Oberfläche der Standfläche 1 eine Ebene bildet, sodass zwischen Aufenthaltsbereich 3 und Mistbereich 5 keine Stufe besteht.

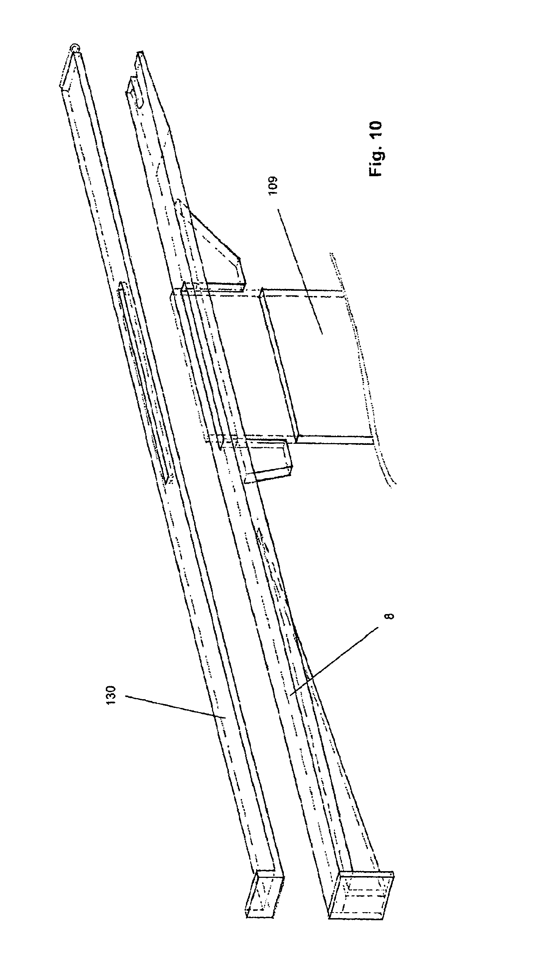

In dieser Ausführung ist die Schubzunge 8 (siehe Fig. 10) nicht starr mit dem Schubzungenwagen 109 verbunden, sondern tritt mit diesem erst beim Absenken in Kontakt (siehe Fig. 10). Zusätzlich ist ein Abstreifblech 130 vorgesehen, das oberhalb der Schubzunge 8 angeordnet ist. Dieses Abstreifblech 130 hat beim Zurückziehen der Schubzunge 8 die Aufgabe, allfälligen auf der Schubzunge 8 befindlichen Mist abzustreifen, der wiederum von der Schubzunge in die Rinne 7 befördert wird und so nicht die sich bewegenden Teile unterhalb der Standfläche 1 beeinträchtigen kann.

Es versteht sich, dass die vorliegende Erfindung nicht auf das oben beschriebene Ausführungsbeispiele beschränkt ist. Insbesondere können erfindungsgemäße Schubelemente vorgesehen sein, deren Breite der Gesamtbreite der Standfläche entspricht. Alternativ kann das Element an beiden Enden, und zwar zusätzlich an der der Fressstelle zugewandten Seite absenkbar ausgeführt sein, sodass die auf der Oberfläche des Elementes befindlichen Verunreinigungen mittels Schubelement beispielsweise in eine unterirdische Auffangvorrichtung befördert werden. Bei dieser Ausführung ist der Aufenthaltsbereich nicht mit einer einstückigen Auflage abgedeckt, sondern besteht aus nebeneinander geordneten Elementen, die in ihrer Ruheposition eine einheitliche Fläche bilden.

Ebenso können die Führungselemente oder die Hub- und Schubzylinder durch andere dem Fachmann bekannte, geeignete Mittel ersetzt werden. Wesentlich für die Erfindung ist, dass einer Standfläche zumindest ein erfindungsgemäßes Element mit einer Schubeinrichtung zugeordnet ist, das den Stallmist durch Wegschieben entfernt.

## Patentansprüche

1. Entmistungssystem zur Beseitigung von Stallmist von einer Standfläche (1) mit einem Aufenthaltsbereich (3) für ein Tier, insbesondere Rind oder Pferd, **dadurch gekennzeichnet, dass** die Standfläche (1) eine Vielzahl von nebeneinander angeordneten Elementen (6, 6') aufweist, wobei jedes Element (6, 6') aus einer ersten, angehobenen Position in eine zweite, abgesenkte Position bewegbar ist, sich jedes Element (6, 6') über eine Länge der Standfläche (1) erstreckt und eine Oberfläche des Elementes (6, 6') in einer angehobenen Position des Elementes (6, 6') Bestandteil der Standfläche (1) ist, das Element (6, 6') zumindest eine aus einer Ruheposition in eine Entmistungsposition über die Oberfläche des Elementes (6, 6') bewegbare Schubeinrichtung (8, 8') aufweist, um einen auf der Oberfläche des Elementes (6, 6') befindlichen Stallmist in eine Auffangvorrichtung (7) zu bewegen, und die Schubeinrichtung (8, 8') bei abgesenktem Element (6, 6') unterhalb jener Ebene bewegbar ist, In der sich die Oberfläche des Elementes (6, 6') bei angehobener Position des Elementes (6, 6') befindet.

2. Entmistungssystem nach Anspruch 1, **dadurch gekennzeichnet, dass** jedes Element (6, 6') an zumindest einem Ende absenkbar ist.

3. Entmistungssystem nach Anspruch 2, **dadurch gekennzeichnet, dass** das zumindest eine Ende des Elements (6, 6') mit zumindest einem Hubzylinder (11, 12) in Verbindung steht, der das Element (6, 6') an zumindest einem Ende absenkt.

4. Entmistungssystem nach Anspruch 3, **dadurch gekennzeichnet, dass** das zumindest eine Ende des Elements (6, 6') über ein Verbindungselement (11a, 12a) mit zumindest einem weiteren Element (6, 6'), das kein benachbartes Element (6, 6') ist, sowie mit zumindest einem Hubzylinder (11, 12) in Verbindung steht.

5. Entmistungssystem nach einem der Ansprüche 1 bis 4, **dadurch gekennzeichnet, dass** die Schubeinrichtung (8, 8') mit einem Schubzylinder (10) in Verbindung steht, der die Schubeinrichtung (8, 8') in einer im wesentlichen horizontale Richtung bewegt.

6. Entmistungssystem nach einem der Ansprüche 3 bis 5, **dadurch gekennzeichnet, dass** der Schubzylinder (10) und/oder der zumindest eine Hubzylinder (11, 12) pneumatisch, hydraulisch oder elektrisch angetrieben sind.

7. Entmistungssystem nach einem der Ansprüche 1 bis 6, **dadurch gekennzeichnet, dass** der Aufenthaltsbereich (3) eine einstückige Auflage (4), bevorzugterweise aus Gummi oder Kunststoff, aufweist, wobei an dem Aufenthaltsbereich (3) ein Mistbereich (5) anschließt, der von den Schubeinrichtungen (8, 8') von Stallmist befreit wird.

8. Entmistungssystem nach einem der Ansprüche 1 bis 7, **dadurch gekennzeichnet, dass** die Schubeinrichtungen (8, 8') in der Ruheposition unterhalb des Aufenthaltsbereiches (3) für das Tier angeordnet sind, und in der Entmistungsposition über den Mistbereich (5) bewegbar sind.

9. Entmistungssystem nach einem der Ansprüche 1 bis 8, **dadurch gekennzeichnet, dass** die Elemente (6, 6') vorzugsweise in zumindest zwei Gruppen zusammengefasst sind, wobei jede Gruppe zumindest ein Element (6, 6') umfasst, und jede Gruppe getrennt ansteuerbar ist.

10. Entmistungssystem nach Anspruch 9, **dadurch gekennzeichnet, dass** nebeneinander angeordneten Elemente (6, 6') unterschiedlichen Gruppen zugeordnet sind.

11. Entmistungssystem nach einem der Ansprüche 9 bis 10, **dadurch gekennzeichnet, dass** jeder Gruppe ein Hubzylinder (11, 12) und ein Schubzylinder (10) zugeordnet ist.

12. Verfahren zur Beseitigung von Stallmist von einer Standfläche (1) mit einem Aufenthaltsbereich (3) für ein Tier und einem Mistbereich (5), wobei der Standfläche (1) eine Vielzahl von nebeneinander angeordneten Elementen (6, 6') zugeordnet ist, **dadurch gekennzeichnet, dass** zumindest ein mit zumindest einer Schubeinrichtung (8, 8') versehenes Element (6, 6') aus einer Ruheposition in eine Entmistungsposition bewegt wird, wobei es an zumindest einem Ende abgesenkt und die Schubeinrichtung (8, 8') anschließend zumindest über den Mistbereich (5) geführt wird, und der auf dem Mistbereich (5) befindliche Stallmist in eine Auffangvorrichtung (7) befördert wird.

13. Verfahren nach Anspruch 12, **dadurch gekennzeichnet, dass** eine erste Gruppe von Elementen (6') angesteuert wird, wobei diese Elemente (6') an zumindest einem Ende abgesenkt werden und die den Elementen (6') zugeordnete Schubeinrichtungen (8') den Stallmist in die Auffangvorrichtung (7) befördern, während zumindest eine zweite Gruppe von Elementen (6) in ihrer Ruheposition verbleibt.
